# EUROPEAN PATENT SPECIFICATION

(11) **EP 1 953 951 B1**
(45) Date of publication and mention of the grant of the patent: **03.04.2013**
(21) Application number: 06805196.0
(22) Date of filing: 09.11.2006
(51) Int. Cl.: H04L 12/06

(54) **A DATA PROCESSING METHOD IN A BRIDGED NETWORK, A NETWORK BRIDGE AND A BRIDGED NETWORK**
DATENVERARBEITUNGSVERFAHREN IN EINEM NETZWERK MIT BRÜCKE, NETZWERKBRÜCKE UND NETZWERK MIT BRÜCKE
PROCEDE DE TRAITEMENT DE DONNEES DANS UN RESEAU A PASSERELLE, PASSERELLE DE RESEAU ET RESEAU A PASSERELLE

(30) Priority: 11.11.2005 CN 200510124409
(43) Date of publication of application: 06.08.2008
(73) Proprietor: Huawei Technologies Co., Ltd., Longgang District, Shenzhen Guangdong 518129 (CN)
(72) Inventor: ZOU, Shimin, Shenzhen Guangdong 518129 (CN)
(74) Representative: Körber, Martin Hans
(86) International application number: PCT/CN2006/003000
(87) International publication number: WO 2007/054025

(56) References cited:
- WO-A1-2005/069551
- CN-A- 1 561 045
- CN-A- 1 645 834
- JP-A- 02 140 034
- US-A- 5 220 562
- US-A1- 2004 047 300
- US-A1- 2004 184 408
- US-A1- 2004 184 408
- US-A1- 2005 138 008

## Description

### Field of the Invention

The present invention relates to the field of communication, and more particularly to a method for data processing in bridged network, a bridge and a bridged network.

### Background of the Invention

In a traditional Ethernet bridged network using spanning trees to transfer data, because the same spanning trees are used to transfer data in a broadcast domain (including data transfer in multi-broadcast domains using the same spanning trees), a data transfer table is established by address learning upon user data packet passes through bridged network (referred to IEEE 802.1D). When the spanning tree topology is changed, the address is learned again.

Further, in addition to being transferred in accordance with the MAC address information, the data packet may also be transferred in accordance with the VLAN configure information by dividing different broadcast domains, which are divided by the VLAN. (referred to IEEE 802.1 Q)

It can be seen that, in the existing Ethernet which uses the spanning tree to transfer data, the establishment of data transfer table with VLAN is driven by the user data stream according to the user data packet MAC address learning.

Because in the traditional data packet transfer patterns the data transfer table inside the bridged network depends on the user address establishment or is established by the driven of user data stream, the large number of MAC users served by the bridged network will impact on the performance of the bridged network, and the large number of user data packets will be broadcasted in the bridged network because the address is learned again when the topology is changed, before the data transfer table is established.

The first technical solution of the prior art:

Nortel proposes a solution with the patent No. US 2004/0184408 for the network of service providers having capability of avoiding storing and processing over many MAC addresses to enhance capability of the network of service providers. The solution adopts a mechanism of MAC in MAC. The basic art is that when the user data packet reaches the network bridge of the service providers, that is, the boundary line of the service providers, the service providers re-encapsulate an outer MAC header, which includes a source service provider address and a destination service provider address.

For the encapsulation of the outer MAC header, a service provider boundary device needs to use a received resource address, which has an outer MAC header data packet, to process mapping learning of a user destination MAC address, a destination service provider address and a service provider destination address. The service provider address is a network inner address of the service provider. Using the art, the network core bridge of the service provider can shield the MAC address of the users. In a bridged network a data transfer table is established on the basis of an address learning of the service provider.

But the art depends on the driving of the user data stream to establish the data transfer table. The bridged network does not need to store a user inter address but still needs to learn according to the user data stream (including an encapsulated user data stream). So operating time occupied by the learning is not reduced obviously.

Further, when a spanning tree topology is changed, lots of user data is broadcasted in the bridged network before the data transfer table is established because address learning is needed again based on the user data.

The second technical solution of the prior art:

A patent with the publication No. US 2004/0225725 and titled Network System, Learning Bridge Node, Learning Method and Program solves a basic problem to implement the establishing a data transfer table about MAC by TAG learning and adapting data packet by TAG in a spanning tree topology with an asymmetric route. The method is as that the bridge node sends the learning packet along the opposite direction of the route of a user data stream periodically. The learning packet includes TAG and the corresponding source address which derives from a buffering table of the MAC source address. With this solution, the transfer marker TAG may be learned in most conditions of asymmetric route.

However, the art does not describe how to choose a reverse route to transfer learning packets and that is a key point of solving the art problem. An aim of the asymmetric learning is to make a user data stream obtain a transfer route. The route of a user data stream is not known so learning packets can not be broadcasted along a route opposite the direction of the user data stream.

The patent does not show a clear technical solution about how to treat the former process of address learning of user data packet.

The art adopts TAG transfer, so it is not compatible with the prior art which transfers data using a MAC address.

The TAG learning of the art correlates with a source MAC address of a cache memory, and therefore large number of user MAC addresses brings difficulty to TAG distributing and brings large load to network of operator when the act is adopted in a service provider network.

Further prior art solutions are disclosed in documents US 2004/0047300 and US 2005/0138008.

### Summary of the Invention

An embodiment of the present invention provides a method for data processing in a bridged network and a bridged network to solve the problem in the prior art, that is, the overload brought to bridged network by handling of the user MAC address and the effect on the transfer of user data packet when the topology of the spanning tree is changed.

A method for data processing in bridged network connected by a bridge includes: generating a spanning tree in the bridged network, and establishing a unicast forwarding table of the spanning tree using a register packet carrying information of a source address, destination address and register address, wherein the register address is an address of one or more elements of the network topology of the bridge which sends register packets by:

transmitting, by a bridge on the spanning tree, the register packet along the spanning tree after the spanning tree is spanned;

obtaining and recording, by a middle bridge receiving the register packet, forwarding table entries according to the information of the register packet and a receiving port, and transferring the register packet until the register packet is transferred to all of the bridge of the spanning tree; when a data packet out of the bridge network arrives at the bridge network, according to the unicast forwarding table, transferring the data packet from an entrance bridge where the data packet arrives along the spanning tree, then transmitting the data packet through an outer port of an exit bridge in the exit bridge.

A bridge includes: a control protocol body unit adapted to establish a unicast forwarding table which is a unicast forwarding table of a spanning tree in the bridged network; a forwarding table storage unit adapted to store the unicast forwarding table; a data packet transfer unit adapted to transfer a received data packet according to the unicast forwarding table;

the control protocol body unit comprises:

a register packet processing unit adapted to receive a register packet carrying information of a source address, destination address and register address transmitted by other bridges, wherein the register address is an address of one or more elements of the network topology of the bridge which sends register packets; and

a register packet transmitting unit adapted to transmit the register packet to a root port of the spanning tree.

A bridged network A bridged network comprises one or more bridges mentioned aboved.

A transfer table is established for the bridge or the bridge port address and a unicast forwarding table is established for the generation or change of topology of the bridged network in the bridged network. So that the number of the MAC addresses of establishing processing of the unicast forwarding table is reduced greatly and the time occupied by establishing the unicast forwarding table is also reduced greatly.

The unicast forwarding table is established for address learning of topology elements in the bridged network. After the inner topology is changed, a control protocol body unit establishes a unicast forwarding table about the address of the network topology elements quickly, so that lots of user data packets will not be broadcasted after the topology is changed.

In a method and system for data processing in the bridged network, the unicast forwarding table may be established by the control protocol (spanning tree protocol), the original processing of the address learning of data plane can be closed. Therefore, software may be upgraded easily and the burden of hardware processing is reduced.

### Brief Description of the Drawings

FIG 1 is a block diagram of a bridged network of the embodiment of the present invention;

FIG. 2 is a flow diagram of the establish of a unicast forwarding table of the embodiment of the present invention;

Figure 3 is a block diagram of a bridge of the embodiment of the present invention; and

Figure 4 is a block diagram of a control protocol body unit of the embodiment of the present invention;

### Detailed Description of the Embodiments

The embodiments of the present invention are further described in connection with the drawings.

A technical solution of the present invention is applied in a bridged network which is connected by bridges. In the bridges networks control protocol can be adopted, such as extending existing Spanning Tree Protocol (STP)/Multi-Spanning Tree Protocol (MSTP) or Generic Attribute Registration Protocol (GARP) and registering of a network topology element address processing by bridged network such as a bridge address in the bridged network and a bridge port address.

A technical solution of an embodiment of the present is processing the tree protocol to form a spanning tree in the bridged network and establishing a unicast forwarding table of the bridged network by transmitting a register packet. Here control protocol can be adopted in the establishing process of the unicast forwarding table, which may not be driven by user data stream. The protocol as mentioned above is capable of controlling the bridged network while keeping independence of the user data stream. A control protocol body unit is set in a bridge to control the establishment of the unicast forwarding table and replace the corresponding register of the bridge.

A technique of MAC in MAC can be adopted in encapsulating data packet in an embodiment of the present invention. In an entrance bridge that is entered by the data packet from an outer port of the bridged network, before the data packet is transmitted on an inner port, an outer MAC header, which is the furthest MAC header in a data packet encapsulated muti-MAC header, is added in the data packet. A source address included in the MAC header includes an address of the entrance bridge or an outer port address of the entrance bridge. A destination address included in the MAC header is an address of an exit bridge or an outer address of the exit bridge from which the data packet is transmitted. The processed data packet is transferred in the bridged network along the unicast forwarding table set by the embodiment of the present invention. The encapsulated outer header is needed take out in an exit of the bridged network. It is permitted that format and occupying digit of the address of the outer MAC header is different of that of the inner MAC header. The inner MAC header is the second MAC header in the data packet encapsulated muti-MAC headers.

When the technical solution of the embodiment of the present invention is used, source address learning process of the previous data packet is closed for other bridge ports except outer ports of the bridged network which is a bridge port of the bridged network connecting with devices out of the bridged network and can also be called the user port.

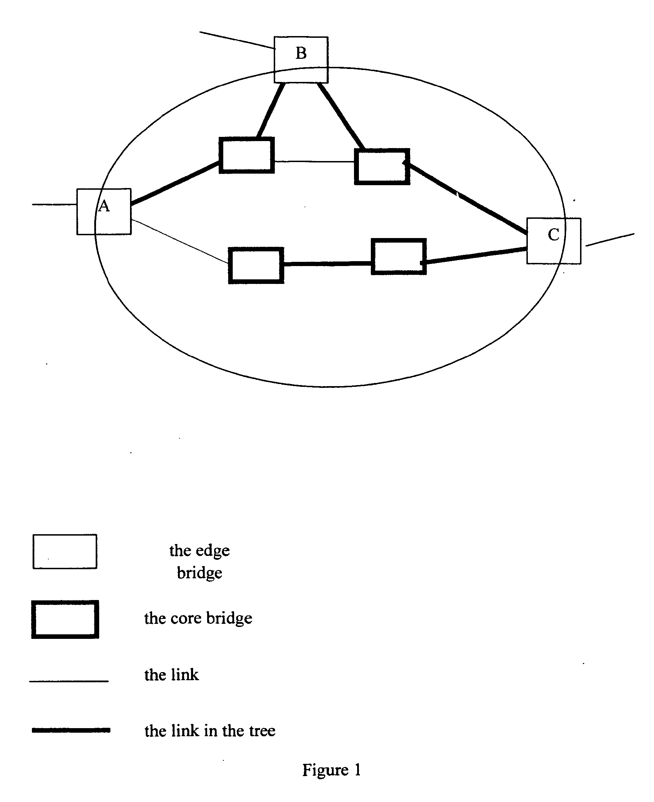

As shown in Figure 1, a structure diagram of the bridged, network of the embodiment of the present invention is illustrated. It can be seen from the figure that a spanning tree based on root B is built in the network. The edge bridge has an MAC in MAC encapsulation mechanism, and is able to initialize the control protocol to build a unicast forwarding table. The core bridge, which links the other two bridges in a bridged network and is referred as a core bridge, and the edge bridge, which includes outer ports of the bridged network, may build a unicast forwarding table with register message.

A detailed description of the procedure for establishing a unicast forwarding table is provided in accordance with the embodiment of the present invention.

First, except for the outer ports, the control unit of the protocol of each bridge node sends register packets periodically to root ports or the specified ports of the bridged network on their volunteer. A register packet, which can also be called the register message, includes a source address, a destination address and a register address.

The register address is the address of one or more elements of the network topology of the bridge which sends register packets, such as the MAC address of the outer ports of the bridged network or the MAC address of the bridge in such procedure. The MAC destination address contained in the register packet may be a specified multicast address such as a predetermined multicast address of the control protocol unit or the register packet of the multicast address is a destination address which is only handled by the control protocol unit.

The middle bridge receives the register packet, and obtains one or more items of the transfer table including a destination MAC address, the corresponding source address, and a transmit port, with the addresses of the network topology elements and the relating receiving ports. The bridge adds the items of the transfer table in to the transfer database. The bridge then transfers the data to the root port which is not the receiving ports of the spanning tree or the specified ports which are not the outer ports, until the register packet is transferred to all bridges of the spanning tree and the unicast forwarding table is established.

In this solution, the protocol control unit which receives and handles the register packet has a corresponding aging mechanism for the network topology elements of the register packet, the same as the aging mechanism of the traditional bridges.

Further, the original unicast forwarding table is deleted and a new spanning tree is generated again when the network topology is changed and the above procedures are repeated to control the register process.

The solution is further optimized in the case that a bridge may send a register packet in a period at the requirement of the management configuration.

The solution is further optimized in the case that if a bridge is a core node without outer ports, it is not necessary to send register messages on its volunteer.

The solution is further optimized in the case that each bridge besides the root bridge can be locally build items of a transfer including a MAC address of a root bridge and the number of the root port table, while the protocol control unit to build a transferring process of the data forwarding table is not necessary.

The aforesaid outer ports may be predetermined in the implementations above.

The solution is further optimized in the case that the outer ports may not be configured, and the sending of the register packets is no more focused on the outer ports. However, because the register packet is a newly defined protocol packet, the packets sending to the outer ports will be discarded outside the bridged network.

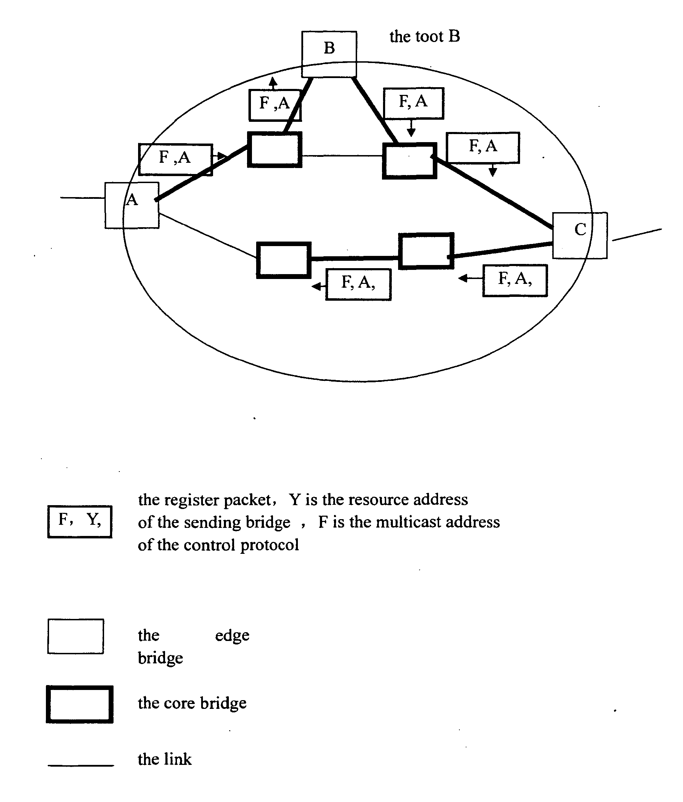

As shown in Figure 2, the establishment of the unicast forwarding table issued by the protocol control unit according to the embodiment of the present invention is illustrated. When the edge bridge A knows C is generated by the root of the spanning tree, it initializes to build the unicast forwarding table on it volunteer, and send the register packet which is all along transferred to the root of the spanning tree. The protocol control unit receiving the register packet builds items of a transfer table based on the address of the edge bridge A and the receiving ports. The destination address may be the multicast address of the protocol control unit in order to offer facilities for the protocol control unit to receive the register packet.

The unicast forwarding table of the embodiment of the present invention may be built through other solutions .For example, the protocol control unit of each edge bridge issues a register process of the register address, which is responsible for establishing a unicast forwarding table, controlled by the protocol control unit. The register address is derived from the user source address obtained through the address learning at arrival of the edge bridge by the external user data packets of the bridged network, and the addresses of the network topology elements. The user source address is complied at the aging process of the traditional address learning. Further such register addresses are also called access addresses of the edge bridges and the establishment of the unicast forwarding table is more detailed as follow:

The protocol control unit of the edge bridge sends the register packet having its register address, the destination address of which is a specified multicast address used by the protocol control unit.

Additionally, the register packet also contains one or more register addresses and register types including adding and deleting. The register packet is broadcasted along the spanning tree, that is, the register packet is sent to all the outer ports of the network which is not in the bridged network and named none user access ports. The process may be optimized if the register packet is not sent to the user ports.

After the protocol control unit receives the register packet, one or more items of the transfer table including a register address and the port is obtained from the register address of the receiving ports and the register packets, upon the type of the register is add, while the original corresponding items of the transfer table including a register address and the port is deleted from the register address of the receiving ports and the register packets, upon the type of the register is delete.

The register packet continuously broadcast along the spanning tree in accordance with the edge bridge specified by the register packet. In other words, the register packet is transmitted to all ports which are not receiving ports till the register packet is transferred to the all bridges of the spanning tree. Such process may be optimized for the register packet not sending to the user ports.

The solution is further optimized in the case that when the topology of the spanning tree is changed, the edge bridge transmits the user register packet based on its register address and the processing of the register packet is the same as the above description.

The solution is further optimized in the case that a verification mechanism is adopted between the register packet sending bridge and the register packet receiving bridge. The verification packet is sent to the register packet sending bridge upon the bridge node receives the register packet. If the valid verification packet is not received in a certain period by the sending bridge, the register packet is transmitted again; otherwise the register packet is stopped to be sent.

The data transferring of the above solution may be optimized as follows. When the topology is changed, the edge bridge will handle the register packet after waiting for a certain time, and transmit the unicast user data packet again to avoid the affection of large broadcast of the data packets.

The above solution may be optimized in the case that the register packet is further allowed to contain VLAN information, and the transferring of the register packet is restricted by the VLAN, like the traditional data packet containing VLAN is restricted by the VLAN configuration.

The above register process may be alternatively as follows:

The protocol control unit of the edge bridge transmits its register packet containing the register address in period. The destination address of the message is a specified multicast address used by the protocol control unit. In addition, the message further includes one or more register addresses. The message is broadcasted along the spanning tree, that is, the register packet is transmitted to all ports of the spanning trees, which are not the outer ports. Moreover, the process may be optimized as the register packet not sending to the user ports.

After the register packet of the register address are received by the protocol control unit of each bridge, one or more items of the transfer table including a register address and a port is obtained from the register address of the receiving ports and the register packets, and the register packet continues on broadcasting along the spanning tree rooted by the edge bridge according to the edge bridge specified by the register packet, that is, the register packet is transmitted to all the ports which are not the outer ports and the process may be preferred as the register packet not sending to the user ports.

Further, the above solution may be further optimized in the case that when the topology of the spanning tree is changed, the register packet is sent by the edge bridge immediately according to its register address. And the processing of the register packet is the same as the step 1 and step 2.

The bridge nodes employ the traditional aging mechanism to perform the aging mechanism to the items of the transfer table it establishes.

The data transferring of the above solution may be optimized when the topology is changed, the edge bridge will handle the register packet after waiting for certain period of time, and transmit the unicast user data packet again to avoid the affection of large broadcast of the data packets.

A new bridge and a bridged network of the same are provided by the embodiments of the present invention. The bridged network is connected through the bridge nodes. After the data packet from the outer ports is at arrival of the bridged network, the data packet is transferred basing on the unicast forwarding table in the bridged network.

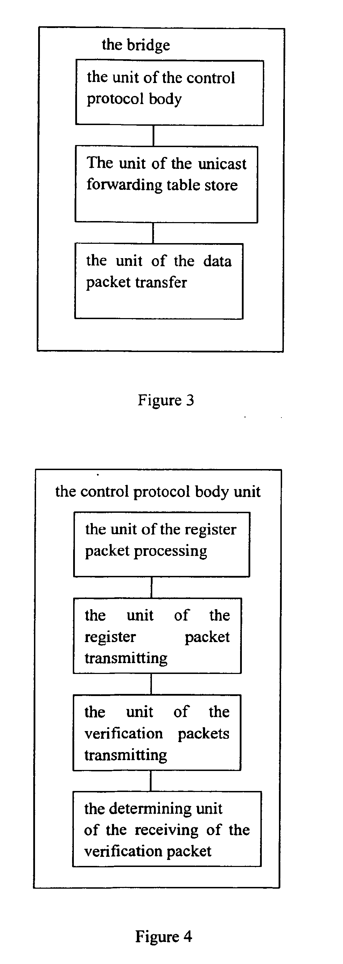

As shown in Figure 3, a structure diagram of the bridge in the bridged network according to the embodiment of the present invention is illustrated. It can be seen that the bridge of the bridged network includes: a control protocol body unit adapted to establish a unicast forwarding table which is a unicast forwarding table of a spanning tree in the bridged network; a forwarding table storage unit adapted to store the unicast forwarding table; and a data packet transfer unit adapted to transfer a received data packet according to the unicast forwarding table.

AS shown in Figure 4, a structure diagram of the control protocol body of embodiment of the present invention is illustrated. It can be seen that the control protocol body unit may include: a register packet processing unit adapted to receive a register packet transmitted by other bridges and establish a unicast forwarding table; a register packet transmitting unit adapted to transmit the register packet to a root port of the spanning tree; a verification packet transmitting unit adapted to transmit, after the register packet processing unit receives the register packet, a verification packet to a bridge transmitting register packet; and a verification packet receiving and determining unit adapted to set a time threshold of receiving the verification packet, the bridge transmitting register packet transmitting the register packet again when the bridge transmitting register packet does not receive a verification packet in the setting time threshold.

The embodiments of the method and system for data processing in the bridged network provide the unicast forwarding table which is established by the control protocol that is called the spanning tree protocol. Original processing of address learning can be closed. Software can be upgraded easily and the load of hardware processing is reduced.

The number of the MAC address can be largely reduced and the time for establishing the transfer table is shorten during the establishment of the transfer table for the control protocol is built only to a transfer table for bridge or bridge port address and the transfer table is established only when the topology of the bridged network is generated or changed in the bridged network.

Because the establishment of the transfer table is based on the address learning of the network topology elements in the bridged network, the protocol control unit of the bridge in the bridged network will immediately build a data transfer table of the network topology elements addressees after the side topology is changed. Therefore, it will not lead the large number of user data packets to be broadcasted after the change of the topology.

It should be understood that the above embodiments are used only to explain, but not to limit the present invention. In despite of the detailed description of the present invention with referring to above embodiments, it should be understood that various modifications, changes or equivalent replacements can be made by those skilled in the art without departing from the scope of the present invention and covered in the claims of the present invention.

## Claims

1. A method for data processing in a bridged network which is connected by bridges, comprising:
forming a spanning tree in a bridged network, and establishing a unicast forwarding table of the spanning tree using a register packet carrying information of a source address, destination address and register address, wherein the register address is an address of one or more elements of the network topology of the bridge which sends register packets, by:
transmitting, by a bridge on the spanning tree, the register packet along the spanning tree after the spanning tree is spanned;
obtaining and recording, by a middle bridge receiving the register packet, forwarding table entries according to the information of the register packet and a receiving port, and transferring the register packet until the register packet is transferred to all of the bridges of the spanning tree;
when a data packet out of the bridge network arrives at the bridge network, according to the unicast forwarding table, forwarding the data packet from an entrance bridge where the data packet arrives along the spanning tree, then transmitting the data packet through an outer port in the exit bridge.

2. The method according to claim 1, encapsulating the data packet with an outer address in the entrance bridge and de-encapsulating the encapsulated outer address in the exit bridge.

3. The method according to claim 1, wherein the transmitting register packet along the spanning tree in the step A comprises:
transmitting the register packet to ports of the spanning tree, which are not outer ports, by the bridge of the spanning tree; or
broadcasting the register packet along the spanning tree by an edge bridge of the spanning tree.

4. The method according to claim 1, wherein the information of the register address in the step A is one or more register addresses.

5. The method according to claim 4, wherein the register address is an outer port address of the bridged network, an address of the bridge or a user MAC address.

6. The method according to claim 1, wherein the destination address is a multicasting address and the source address is an address of a bridge initializing a register.

7. The method according to claim 1, wherein the items of the transfer table in the step B comprise a destination MAC address and a transmit port identification.

8. The method according to claim 1, further comprising:
transmitting, by a bridge receiving register packet, a verification packet to a bridge transmitting register packet after receiving the register packet; and
transmitting register packet transmitting the register packet again if the bridge transmitting register packet does not receive the verification packet within a preset time threshold.

9. The method to claim 1, further comprising:
transmitting, by the bridge of transmitting the register packet, a canceling register packet, and after a registered bridge receives the canceling register packet, canceling the register and deleting the corresponding forwarding table entries.

10. The method according to claim 1, comprising: when a topology of the bridged network is changed, canceling an original unicast forwarding table, and establishing a new unicast forwarding table when a new spanning tree is formed.

11. The method according to claim 1, wherein the step A is processed periodically.

12. The method according to claim 1, wherein a source address learning process of the data packet is closed for the bridge ports except the outer ports of the bridged network.

13. A bridge, comprising:
a control protocol body unit adapted to establish a unicast forwarding table which is a unicast forwarding table of a spanning tree in the bridged network;
a forwarding table storage unit adapted to store the unicast forwarding table;
a data packet transfer unit adapted to transfer a received data packet according to the unicast forwarding table;
characterized that the control protocol body unit comprises:
a register packet processing unit adapted to receive a register packet carrying information of a source address, destination address and register address transmitted by other bridges, wherein the register address is an address of one or more elements of the network topology of the bridge which sends register packets; and
a register packet transmitting unit adapted to transmit the register packet to a root port of the spanning tree.

14. The bridge according to claim 13, wherein the control protocol body unit further comprises:
a verification packet transmitting unit adapted to transmit, after the register packet processing unit receives the register packet, a verification packet to a bridge transmitting register packet; and
a verification packet receiving and determining unit adapted to set a time threshold of receiving the verification packet, and the bridge transmitting register packet transmits the register packet again when the bridge transmitting register packet does not receive a verification packet in the setting time threshold.

15. A bridged network comprises one or more bridges according to claim 13 or 14.

## Patentansprüche

1. Verfahren zur Datenverarbeitung in einem Brückennetz, das durch Brücken verbunden ist, das Folgendes umfasst:
Bilden eines überspannenden Baums in einem Brückennetz und Aufbauen einer Unicast-Weiterleitungstabelle des überspannenden Baums unter Verwendung eines Registerpakets, das Informationen einer Quelladresse, einer Zieladresse und einer Registeradresse führt, wobei die Registeradresse eine Adresse eines oder mehrerer Elemente der Netztopologie der Brücke ist, die Registerpakete sendet, durch:
Senden mittels einer Brücke in dem überspannenden Baum des Registerpakets längs des überspannenden Baums, nachdem der überspannende Baum aufgespannt worden ist;
Erhalten und Aufzeichnen mittels einer mittleren Brücke, die das Registerpaket empfängt, von Weiterleitungstabelleneinträgen in Übereinstimmung mit den Informationen des Registerpakets und eines Empfangs-Ports und Übertragen des Registerpakets, bis das Registerpaket an alle Brücken des überspannenden Baums übertragen worden ist;
dann, wenn ein Datenpaket aus dem Brückennetz bei dem Brückennetz ankommt, Weiterleiten des Datenpakets in Übereinstimmung mit der Unicast-Weiterleitungstabelle von einer Eintrittsbrücke, wo das Datenpaket ankommt, längs des überspannenden Baums und dann Senden des Datenpakets durch einen äußeren Port in der Austrittsbrücke.

2. Verfahren nach Anspruch 1, umfassend das Verkapseln des Datenpakets mit einer äußeren Adresse in der Eintrittsbrücke und das Entkapseln der eingekapselten äußeren Adresse in der Austrittsbrücke.

3. Verfahren nach Anspruch 1, wobei das Senden des Registerpakets längs des überspannenden Baums in dem Schritt A Folgendes umfasst:
Senden des Registerpakets zu Ports des überspannenden Baums, die keine äußeren Ports sind, mittels der Brücke des überspannenden Baums; oder
Rundsenden des Registerpakets längs des überspannenden Baums mittels einer Randbrücke des überspannenden Baums.

4. Verfahren nach Anspruch 1, wobei die Informationen der Registeradresse in dem Schritt A eine oder mehrere Registeradressen sind.

5. Verfahren nach Anspruch 4, wobei die Registeradresse eine äußere Port-Adresse des Brückennetzes, eine Adresse der Brücke oder eine Anwender-MAC-Adresse ist.

6. Verfahren nach Anspruch 1, wobei die Zieladresse eine Multicast-Adresse ist und die Quelladresse eine Adresse einer ein Register initialisierenden Brücke ist.

7. Verfahren nach Anspruch 1, wobei die Elemente der Übertragungstabelle im Schritt B eine Ziel-MAC-Adresse und eine Sendeport-Kennung umfassen.

8. Verfahren nach Anspruch 1, das ferner Folgendes umfasst:
Senden mittels einer ein Registerpaket empfangenden Brücke eines Verifikationspakets zu einer ein Registerpaket sendenden Brücke, nachdem das Registerpaket empfangen worden ist; und
erneutes Senden des Registerpakets, falls die ein Registerpaket sendende Brücke das Verifikationspaket innerhalb einer im Voraus festgelegten Zeitschwelle nicht empfängt.

9. Verfahren nach Anspruch 1, das ferner Folgendes umfasst:
Senden mittels der das Registerpaket sendenden Brücke eines Aufhebungsregisterpakets und nachdem eine registrierte Brücke das Aufhebungsregisterpaket empfangen hat, Aufheben des Registers und Löschen der entsprechenden Weiterleitungstabelleneinträge.

10. Verfahren nach Anspruch 1, das Folgendes umfasst:
wenn eine Topologie des Brückennetzes geändert wird, Aufheben einer ursprünglichen Unicast-Weiterleitungstabelle und Aufbauen einer neuen Unicast-Weiterleitungstabelle, wenn ein neuer überspannender Baum gebildet worden ist.

11. Verfahren nach Anspruch 1, wobei der Schritt A periodisch verarbeitet wird.

12. Verfahren nach Anspruch 1, wobei ein Quelladressen-Lernprozess des Datenpakets für die Brücken-Ports mit Ausnahme der äußeren Ports des Brückennetzes geschlossen ist.

13. Brücke, die Folgendes umfasst:
eine Steuerprotokollkörper-Einheit, die dafür ausgelegt ist, eine Unicast-Weiterleitungstabelle aufzubauen, die eine Unicast-Weiterleitungstabelle eines überspannenden Baums in dem Brückennetz ist;
eine Weiterleitungstabellen-Speichereinheit, die dafür ausgelegt ist, die Unicast-Weiterleitungstabelle zu speichern;
eine Datenpaket-Übertragungseinheit, die dafür ausgelegt ist, ein empfangenes Datenpaket in Übereinstimmung mit der Unicast-Weiterleitungstabelle zu übertragen;
**dadurch gekennzeichnet, dass** die Steuerprotokollkörper-Einheit Folgendes umfasst:
eine Registerpaket-Verarbeitungseinheit, die dafür ausgelegt ist, ein Registerpaket, das Informationen über eine Quelladresse, eine Zieladresse und eine Registeradresse führt und von anderen Brücken gesendet wird, zu empfangen, wobei die Registeradresse eine Adresse eines oder mehrerer Elemente der Netztopologie der Brücke ist, die Registerpakete sendet; und
eine Registerpaket-Sendeeinheit, die dafür ausgelegt ist, das Registerpaket zu einem Wurzel-Port des überspannenden Baums zu senden.

14. Brücke nach Anspruch 13, wobei die Steuerprotokollkörper-Einheit ferner Folgendes umfasst:
eine Verifikationspaket-Sendeeinheit, die dafür ausgelegt ist, nachdem die Registerpaket-Verarbeitungseinheit das Registerpaket empfangen hat, ein Verifikationspaket zu einer ein Registerpaket sendenden Brücke zu senden; und
eine Verifikationspaket-Empfangs- und Bestimmungseinheit, die dafür ausgelegt ist, eine Zeitschwelle zum Empfangen des Verifikationspakets einzustellen, wobei die ein Registerpaket sendende Brücke das Registerpaket erneut sendet, wenn die ein Registerpaket sendende Brücke ein Verifikationspaket nicht in der eingestellten Zeitschwelle empfängt.

15. Brückennetz, das eine oder mehrere Brücken nach Anspruch 13 oder 14 umfasst.

## Revendications

1. Procédé de traitement de données dans un réseau ponté qui est connecté par des ponts, comprenant :
la formation d'un arbre couvrant dans un réseau ponté, et l'établissement d'une table de réexpédition de diffusion individuelle de l'arbre couvrant en utilisant un paquet de registre acheminant des informations concernant une adresse de source, une adresse de destination et une adresse de registre, l'adresse de registre étant une adresse d'un ou plusieurs éléments de la topologie de réseau du pont qui envoie des paquets de registres, par :
transmission, par un pont de l'arbre couvrant, du paquet de registre le long de l'arbre couvrant après que l'arbre couvrant a été couvert ;
obtention et enregistrement, par un pont médian recevant le paquet de registre, d'entrées d'une table de réexpédition conformément aux informations du paquet de registre et à un port de réception, et transfert du paquet de registre jusqu'à ce que le paquet de registre soit transféré à tous les ponts de l'arbre couvrant ;
lorsqu'un paquet de données provenant du réseau de ponts atteint le réseau de ponts, conformément à la table de réexpédition de diffusion individuelle, réexpédition du paquet de données depuis un pont d'entrée où arrive le paquet de données, le long de l'arbre couvrant, puis transmission du paquet de données par l'intermédiaire d'un port extérieur dans le pont de sortie.

2. Procédé selon la revendication 1, comprenant l'encapsulation du paquet de données avec une adresse extérieure dans le pont d'entrée et la désencapsulation de l'adresse extérieure encapsulée dans le pont de sortie.

3. Procédé selon la revendication 1, dans lequel la transmission du paquet de registre le long de l'arbre couvrant lors de l'étape A comprend :
la transmission du paquet de registre à des ports de l'arbre couvrant qui ne sont pas des ports extérieurs par le pont de l'arbre couvrant ; ou
la diffusion du paquet de registre le long de l'arbre couvrant par un pont de bord de l'arbre couvrant.

4. Procédé selon la revendication 1, dans lequel les informations de l'adresse de registre lors de l'étape A sont une ou plusieurs adresses de registres.

5. Procédé selon la revendication 4, dans lequel l'adresse de registre est une adresse de port extérieur du réseau ponté, une adresse du pont ou une adresse MAC d'utilisateur.

6. Procédé selon la revendication 1, dans lequel l'adresse de destination est une adresse de multidiffusion et l'adresse de source est une adresse d'un pont initialisant un registre.

7. Procédé selon la revendication 1, dans lequel les éléments de la table de transfert, lors de l'étape B, comprennent une adresse MAC de destination et l'identification d'un port de transmission.

8. Procédé selon la revendication 1, comprenant en outre :
la transmission, par un pont recevant un paquet de registre, d'un paquet de vérification à un pont transmettant un paquet de registre après réception du paquet de registre ; et
la transmission du paquet de registre de nouveau si le pont transmettant le paquet de registre ne reçoit pas le paquet de vérification avant un seuil de temps prédéfini.

9. Procédé selon la revendication 1, comprenant en outre :
la transmission, par le pont transmettant le paquet de registre, d'un paquet de registre d'annulation, et après que le pont enregistré a reçu le paquet de registre d'annulation,
l'annulation du registre et l'effacement des entrées correspondantes de la table de réexpédition.

10. Procédé selon la revendication 1, comprenant :
lorsqu'une topologie du réseau ponté est modifiée, l'annulation d'une table de réexpédition de diffusion individuelle d'origine, et l'établissement d'une nouvelle table de réexpédition de diffusion individuelle lorsqu'un nouvel arbre couvrant est formé.

11. Procédé selon la revendication 1, dans lequel l'étape A est traitée périodiquement.

12. Procédé selon la revendication 1, dans lequel un processus d'apprentissage d'adresse de source du paquet de données est fermé pour les ports des ponts sauf pour les ports extérieurs du réseau ponté.

13. Pont, comprenant :
une unité formant corps de protocole de commande, apte à établir une table de réexpédition de diffusion individuelle qui est une table de réexpédition de diffusion individuelle d'un arbre couvrant dans le réseau ponté ;
une unité de stockage de table de réexpédition apte à stocker la table de réexpédition de diffusion individuelle ;
une unité de transfert de paquet de données apte à transférer un paquet de données reçu conformément à la table de réexpédition de diffusion individuelle ;
**caractérisé en ce que** l'unité formant corps de protocole de commande comprend :
une unité de traitement de paquet de registre apte à recevoir un paquet de registre acheminant des informations indiquant une adresse de source, une adresse de destination et une adresse de registre transmises par d'autres ponts, l'adresse de registre étant une adresse d'un ou plusieurs éléments de la topologie de réseau du pont qui envoie les paquets de registres ; et
une unité de transmission de paquet de registre apte à transmettre le paquet de registre à un port racine de l'arbre couvrant.

14. Pont selon la revendication 13, dans lequel l'unité formant corps de protocole de commande comprend en outre :
une unité de transmission de paquet de vérification apte à transmettre, après que l'unité de traitement de paquet de registre a reçu le paquet de registre, un paquet de vérification à un pont transmettant un paquet de registre ; et
une unité de réception et de détermination de paquet de vérification apte à fixer un seuil de temps pour la réception du paquet de vérification, et le pont transmettant le paquet de registre transmettant à nouveau le paquet de registre lorsque le pont transmettant le paquet de registre ne reçoit pas de paquet de vérification avant le seuil de temps défini.

15. Réseau ponté comprenant un ou plusieurs ponts selon la revendication 13 ou 14.
